# EUROPÄISCHE PATENTSCHRIFT

(11) **EP 2 684 778 B1**
(45) Veröffentlichungstag und Bekanntmachung des Hinweises auf die Patenterteilung: **21.08.2019**
(21) Anmeldenummer: 13001183.6
(22) Anmeldetag: 09.03.2013
(51) Int. Cl.: B62D 21/06, B62D 21/05

(54) **Rahmentragstruktur mit Dämpferträger für Nutzfahrzeug**
Chassis structure with damper for utility vehicle
Châssis avec support d'amortisseur pour véhicule utilitaire

(30) Priorität: 13.07.2012 DE 102012013914
(43) Veröffentlichungstag der Anmeldung: 15.01.2014
(73) Patentinhaber: MAN Truck & Bus SE, 80995 München (DE)
(72) Erfinder: Sattler, Steve, 80992 München (DE); Hintereder, Jürgen, 80997 München (DE)
(74) Vertreter: v. Bezold & Partner Patentanwälte - PartG mbB

(56) Entgegenhaltungen:
- WO-A1-2009/156819
- DE-A1-102004 045 157
- DE-C1- 10 158 107

## Beschreibung

Die Erfindung betrifft eine Rahmentragstruktur für ein Nutzfahrzeug, insbesondere Lastkraftwagen, vorzugsweise Sattelzugmaschine.

DE 101 58 107 C1 offenbart ein modulartig aufgebautes Fahrgestell für Nutzfahrzeuge, mit einem Vorderwagengestell und mit einem damit verbundenen Hinterwagengestell, wobei am Vorderwagengestell an jeder Fahrzeugseite eine Einzelradaufhängung mit Feder- und/oder Dämpferbein sowie mit einem oberen Querlenker und einem unteren Querlenker ausgebildet ist.

Rahmentragstrukturen, insbesondere Fahrgestelle, für Sattelzugmaschinen sind in den unterschiedlichsten Ausführungsformen bekannt. Die Rahmentragstrukturen umfassen üblicherweise zwei Längsträger und mehrere Querträger. Die Rahmentragstrukturen umfassen eine oder mehrere Hinterachsen mit Hinterrädern und Vorderräder, die z.B. über Radaufhängungen mit den Rahmentragstrukturen verbunden sind. Üblicherweise sind zwei in Querrichtung der Rahmentragstrukturen baulich voneinander separierte Dämpferkonsolen vorgesehen, eine für die rechte Radaufhängung und eine für die linke Radaufhängung. Ein Nachteil der baulich voneinander separierten Dämpferkonsolen ist z.B., dass sie baulich relativ viel Platz beanspruchen.

Eine Aufgabe der Erfindung ist es, eine verbesserte und/oder alternative Rahmentragstruktur für ein Nutzfahrzeug zu schaffen.

Diese Aufgabe wird mit den Merkmalen des Hauptanspruchs gelöst. Vorteilhafte Weiterbildungen sind den Unteransprüchen zu entnehmen.

Die Erfindung schafft eine Rahmentragstruktur für ein Nutzfahrzeug, insbesondere Lastkraftwagen, vorzugsweise Sattelzugmaschine. Die Rahmentragstruktur dient vorzugsweise mitunter zum Tragen eines Fahrerhauses. Die Rahmentragstruktur umfasst eine erste längsverlaufende Tragkonstruktion und eine zweite längsverlaufende Tragkonstruktion, die in Querrichtung der Rahmentragstruktur voneinander beabstandet sind. Die Rahmentragstruktur umfasst ferner zwei insbesondere Feder- und/oder Dämpferelemente aufweisende Radaufhängungen für Vorderräder des Nutzfahrzeugs.

Die Rahmentragstruktur zeichnet sich insbesondere dadurch aus, dass sie einen Dämpferträger umfasst, der die zwei Radaufhängungen (vorzugsweise deren Feder- und/oder Dämpferelemente) miteinander verbindet und/oder der dazu dient, Kräfte aus den zwei Radaufhängungen (vorzugsweise deren Feder- und/oder Dämpferelemente) aufzunehmen.

Es ist möglich, dass der Dämpferträger im Wesentlichen in Querrichtung der Rahmentragstruktur verläuft. Alternativ oder ergänzend kann der Dämpferträger mit der ersten Tragkonstruktion und der zweiten Tragkonstruktion z.B. unmittelbar oder über eine Verbindungseinrichtung verbunden sein, um von der ersten Tragkonstruktion und der zweiten Tragkonstruktion getragen zu werden.

Es ist möglich, dass der Dämpferträger als Lagereinrichtung, insbesondere Schwingenlager, für ein Fahrerhaus des Nutzfahrzeugs dient.

Die erste Tragkonstruktion und die zweite Tragkonstruktion sind nach seitlich innen geführt, um eine verschmälerte Tragstruktur auszubilden die vorzugsweise eine vordere Tragstruktur darstellt. Die verschmälerte Tragstruktur ist vorzugsweise zwischen den Vorderrädern für das Nutzfahrzeug angeordnet.

Der Dämpferträger verläuft über die verschmälerte Tragstruktur und zwar vorzugsweise im Wesentlichen in Querrichtung der Rahmentragstruktur und/oder in deren schmälstem Bereich.

Die verschmälerte Tragstruktur schafft insbesondere Raum, der zur Aufnahme der Radaufhängungen dienen kann (insbesondere deren Feder- und/oder Dämpferelemente).

Die Rahmentragstruktur kann außerdem eine dritte längsverlaufende Tragkonstruktion umfassen, die vorzugsweise mittig zwischen der ersten Tragkonstruktion und der zweiten Tragkonstruktion verläuft und/oder unter dem Niveau der ersten Tragkonstruktion und der zweiten Tragkonstruktion verläuft.

Die Rahmentragstruktur umfasst eine Verbindungseinrichtung, die die erste Tragkonstruktion, die zweite Tragkonstruktion und die dritte Tragkonstruktion mit dem Dämpferträger miteinander verbindet.

Insbesondere ist der Dämpferträger oben auf oberen Enden der Feder- und/oder Dämpferelemente der Radaufhängungen angeordnet und dient zweckmäßig dazu, im Wesentlichen vertikal wirkende Kräfte aus den Feder- und/oder Dämpferelemente aufzunehmen.

Der Dämpferträger ist insbesondere mit den Feder- und/oder Dämpferelementen der Radaufhängungen verbunden. Die dritte Tragkonstruktion ist insbesondere mit den Lenkerelementen der Radaufhängungen verbunden.

Die dritte Tragkonstruktion kann insbesondere dazu dienen, im Wesentlichen horizontal wirkende Kräfte aus den Lenkerelementen der Radaufhängungen (z.B. Quer-, Schräg- oder Längslenkerelemente) aufzunehmen.

Die Erfindung umfasst außerdem ein Nutzfahrzeug, insbesondere einen Lastkraftwagen, vorzugsweise eine Sattelzugmaschine, mit einer wie hierin beschrieben Rahmentragstruktur.

Zu erwähnen ist noch, dass das Merkmal "zwischen" vorzugsweise so zu verstehen ist, dass es insbesondere die Positionierung in Querrichtung und/oder in Längsrichtung der Rahmentragstruktur definiert, während die Positionierung in Vertikalrichtung der Rahmentragstruktur nicht eingeschränkt wird, es sei denn, die Positionierung in Vertikalrichtung wird ausdrücklich spezifiziert.

Zu erwähnen ist noch, dass die erfindungsgemäße Rahmentragstruktur bzw. die erste Tragkonstruktion und die zweite Tragkonstruktion insbesondere nicht auf zumindest abschnittsweise aus Tragprofilelementen (z.B. Hohl-, U-, I- oder L-Tragprofilelemente) ausgeführte (z.B. leiterrahmenförmige) Ausführungsformen beschränkt ist, sondern z.B. auch zumindest abschnittsweise monocoqueförmige oder semi-monocoqueförmige Ausführungsformen umfasst. Darunter werden insbesondere schalenförmige Strukturen verstanden, die zweckmäßig selbsttragend ausgebildet sind (z.B. aus Blech-, Tiefzieh- oder Verbundmaterial).

Die vorstehend beschriebenen Merkmale und bevorzugte Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Ansicht einer Rahmentragstruktur für ein Nutzfahrzeug gemäß einer Ausführungsform der Erfindung,
- Fig. 2: zeigt eine Seitenansicht der Rahmentragstruktur der Fig. 1,
- Fig. 3: zeigt eine Draufsicht auf die Rahmentragstruktur der Figuren 1 und 2, und
- Fig. 4: zeigt eine Schnittansicht der Rahmentragstruktur der Figuren 1 bis 3.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

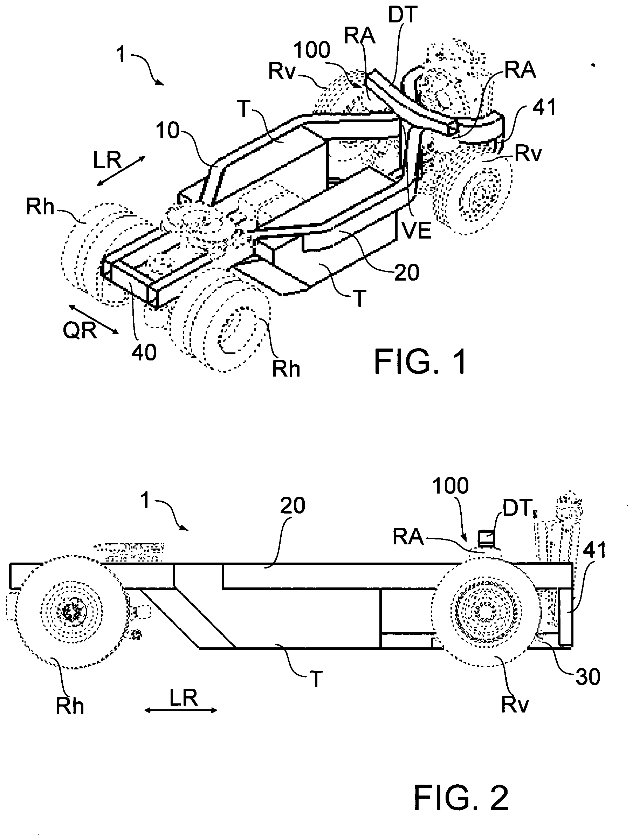

Figur 1 zeigt eine perspektivische Ansicht einer ein Fahrgestell für eine Zugmaschine (Sattelzugmaschine) bildende Rahmentragstruktur 1, die mit einer Sattelplatte versehen ist und mitunter zum Tragen eines Fahrerhauses (nicht dargestellt) für die Zugmaschine dient.

Die Rahmentragstruktur 1 umfasst eine erste in Längsrichtung LR der Rahmentragstruktur 1 verlaufende Tragkonstruktion 10 und eine zweite in Längsrichtung LR der Rahmentragstruktur 1 verlaufende Tragkonstruktion 20, die in Querrichtung QR der Rahmentragstruktur 1 voneinander beabstandet sind und als Rechteckhohlprofile ausgeführt sind. Die Rahmentragstruktur 1 umfasst ferner mehrere Querträger, z.B. einen hinteren Querträger 40 und einen vorderen Querträger 41, die ebenfalls als Rechteckhohlprofile ausgeführt sind.

Die Rahmentragstruktur 1 ist frontseitig mit einer Kühlanordnung versehen, die einen Motorkühler und einen Ladeluftkühler umfasst. Zudem umfasst die Rahmentragstruktur 1 eine Hinterachse mit Hinterrädern Rh. Die Hinterräder Rh sind zwillingsbereift, können aber auch einzelbereift ausgeführt werden. Ebenso ist es möglich, dass die Rahmentragstruktur 1 mit mehr als einer Hinterachse versehen wird. Die Rahmentragstruktur 1 kann zudem z.B. mit einem Dieselmotor, ggf. weiteren Antriebsaggregaten, einem Antriebsstrang, etc. (nicht dargestellt) versehen werden.

Die Rahmentragstruktur 1 umfasst zwei lenkbare Vorderräder Rv für das Nutzfahrzeug und zwei Radaufhängungen RA für die Vorderräder Rv. Eine Radaufhängung RA dient für das linke Vorderrad Rv und die andere Radaufhängung RA dient für das rechte Vorderrad Rv. Die Radaufhängungen RA umfassen Feder- und/oder Dämpferelemente und Lenkelemente (z.B. Quer-, Schräg- oder Längslenker).

Die Rahmentragstruktur 1 ist mit einem Kraftstofftank T versehen, der zwei seitlich voneinander beabstandete Tankabschnitte umfasst, die Durchlassaussparungen aufweisen, die von der ersten Tragkonstruktion 10 und der zweiten Tragkonstruktion 20 durchlaufen werden.

Die erste Tragkonstruktion 10 und die zweite Tragkonstruktion 20 sind nach seitlich innen geführt, um eine verschmälerte Tragstruktur 100 zu bilden, die zwischen den Vorderrädern Rv angeordnet ist und somit eine vordere Tragstruktur 100 darstellt.

Die Rahmentragstruktur 1 umfasst einen Dämpferträger DT, der oben auf den oberen Enden der Feder- und/oder Dämpferelemente der Radaufhängungen RA angeordnet ist und die Feder- und/oder Dämpferelemente der Radaufhängungen RA miteinander verbindet. Der Dämpferträger DT dient dazu, im Wesentlichen vertikal wirkende Kräfte aus den Feder- und/oder Dämpferelementen aufzunehmen.

Der Dämpferträger DT erstreckt sich im Wesentlichen in Querrichtung QR der Rahmentragstruktur 1 und ist mit der ersten Tragkonstruktion 10 und der zweiten Tragkonstruktion 20 z.B. über eine Verbindungseinrichtung VE verbunden, um von der ersten Tragkonstruktion 10 und der zweiten Tragkonstruktion 20 getragen zu werden. Der Dämpferträger DT überquert die verschmälerte Tragstruktur 100 in deren schmälstem Bereich.

Die verschmälerte Tragstruktur 100 schafft Raum, um die Feder- und/oder Dämpferelemente der Radaufhängungen RA aufzunehmen.

Figur 2 zeigt eine Seitenansicht der Rahmentragstruktur 1 der Figur 1. Figur 2 ist insbesondere eine dritte längsverlaufende Tragkonstruktion 30 zu entnehmen, die zwischen der ersten Tragkonstruktion 10 und der zweiten Tragkonstruktion 20 mittig verläuft und unter deren Niveau. Die erste Tragkonstruktion 10, die zweite Tragkonstruktion 20 und die dritte Tragkonstruktion 30 sind über den Querträger 41 miteinander verbunden. Die dritte Tragkonstruktion 30 ist zudem über die Verbindungseinrichtung VE mit dem Dämpferträger DT verbunden. Die Verbindungseinrichtung VE dient somit dazu, den Dämpferträger DT, die erste Tragkonstruktion 10, die zweite Tragkonstruktion 20 und die dritte Tragkonstruktion 30 miteinander zu verbinden.

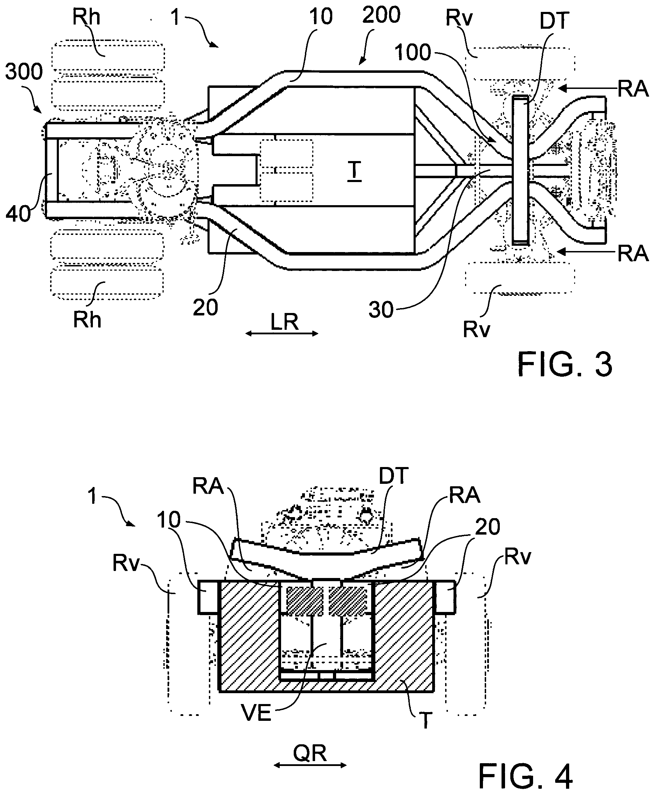

Figur 3 zeigt eine Draufsicht auf die Rahmentragstruktur 1 der Figuren 1 und 2. Figur 3 ist insbesondere zu entnehmen, dass die dritte Tragkonstruktion 30 mit den Lenkelementen der Radaufhängungen RA verbunden ist. Die dritte Tragkonstruktion 30 dient dazu, die im Wesentlichen horizontal wirkenden Kräfte aus den Lenkelementen der Radaufhängungen RA aufzunehmen.

Figur 3 ist z.B. ferner zu entnehmen, dass der Kraftstofftank T die erste Tragkonstruktion 10 und die zweite Tragkonstruktion 20 miteinander verbindet und als Queraussteifungskonstruktion wirken kann. Zu diesem Zweck kann der Kraftstofftank T z.B. mit Verstärkungsmitteln, wie etwa Verstärkungsrippen, Verstärkungsstreben, Verstärkungsplatten, etc. versehen sein.

Figur 3 ist auch zu entnehmen, dass die Rahmentragstruktur 1 zusätzlich zu der vorderen verschmälerten Tragstruktur 100 eine mittlere aufgeweitete Tragstruktur 200 und eine hintere, verschmälerte Tragstruktur 300 umfasst.

Figur 4 zeigt eine Schnittansicht der Rahmentragstruktur 1 der Figuren 1 bis 3 in Längsrichtung LR nach vorne. Figur 4 kann insbesondere entnommen werden, dass die Verbindungseinrichtung VE nicht nur dazu dient, den Dämpferträger DT mit der ersten Tragkonstruktion 10 und der zweiten Tragkonstruktion 20 zu verbinden, sondern zusätzlich mit der dritten Tragkonstruktion 30.

Zu erwähnen ist noch, dass der Dämpferträger DT als Lagerreinrichtung, insbesondere Schwingenlager, für ein Fahrerhaus des Nutzfahrzeugs dienen kann, das über dem Dämpferträger DT und somit über der verschmälerten Tragstruktur 100 platzierbar ist.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommen Merkmalen und Ansprüchen.

## Patentansprüche

1. Rahmentragstruktur (1) für ein Nutzfahrzeug, vorzugsweise Lastkraftwagen, insbesondere Sattelzugmaschine, mit:
- einer ersten längsverlaufenden Tragkonstruktion (10) und einer zweiten längsverlaufenden Tragkonstruktion (20), die in Querrichtung (QR) der Rahmentragstruktur (1) voneinander beabstandet sind, und
- zwei Radaufhängungen (RA) für Vorderräder (Rv) des Nutzfahrzeugs, insbesondere zwei vorzugsweise Feder- und/oder Dämpferelemente aufweisende Radaufhängungen (RA),
wobei
- die Rahmentragstruktur (1) einen Dämpferträger (DT) umfasst, der die zwei Radaufhängungen (RA) miteinander verbindet und/oder der dazu dient, Kräfte aus den zwei Radaufhängungen (RA) aufzunehmen,
**dadurch gekennzeichnet, dass**
- die Rahmentragstruktur (1) eine dritte längsverlaufende Tragkonstruktion (30) umfasst, die zwischen der ersten Tragkonstruktion (10) und der zweiten Tragkonstruktion (20) verläuft; und/oder
- die erste Tragkonstruktion (10) und die zweite Tragkonstruktion (20) nach seitlich innen geführt sind, um eine verschmälerte Tragstruktur (100) auszubilden, wobei der Dämpferträger (DT) über die verschmälerte Tragstruktur (100) verläuft.

2. Rahmentragstruktur (1) nach Anspruch 1, **dadurch gekennzeichnet, dass** der Dämpferträger (DT) im Wesentlichen in Querrichtung (QR) der Rahmentragstruktur (1) verläuft und vorzugsweise mit der ersten Tragkonstruktion (10) und der zweiten Tragkonstruktion (20) verbunden ist, um von der ersten Tragkonstruktion (10) und der zweiten Tragkonstruktion (20) getragen zu werden.

3. Rahmentragstruktur (1) nach Anspruch 1 oder 2, **dadurch gekennzeichnet, dass** der Dämpferträger (DT) zudem als Lagereinrichtung, insbesondere Schwingenlager, für ein Fahrerhaus des Nutzfahrzeugs dient.

4. Rahmentragstruktur (1) nach einem der vorhergehenden Ansprüche, **dadurch gekennzeichnet, dass** die verschmälerte Tragstruktur (100) zwischen den Vorderrädern (Rv) für das Nutzfahrzeug verläuft und vorzugsweise eine vordere Tragstruktur bildet.

5. Rahmentragstruktur (1) nach einem der vorhergehenden Ansprüche, **dadurch gekennzeichnet, dass** die verschmälerte Tragstruktur (100) Raum schafft, der zur Aufnahme der Radaufhängungen (RA) dient, insbesondere deren Feder- und/oder Dämpferelemente.

6. Rahmentragstruktur (1) nach einem der vorhergehenden Ansprüche, **dadurch gekennzeichnet, dass** die dritte längsverlaufende Tragkonstruktion (30) zwischen der ersten Tragkonstruktion (10) und der zweiten Tragkonstruktion (20) verläuft und zwar zumindest abschnittsweise mittig und/oder unter deren Niveau.

7. Rahmentragstruktur (1) nach einem der vorhergehenden Ansprüche, **dadurch gekennzeichnet, dass** die dritte Tragkonstruktion (30) über eine Verbindungseinrichtung (VE) mit dem Dämpferträger (DT) verbunden ist, die zudem die erste Tragkonstruktion (10) mit der zweiten Tragkonstruktion (20) verbindet.

8. Rahmentragstruktur (1) nach einem der vorhergehenden Ansprüche, **dadurch gekennzeichnet, dass** der Dämpferträger (DT) dazu dient, Kräfte aus den Feder- und/oder Dämpferelementen der Radaufhängungen (RA) aufzunehmen und vorzugsweise oben auf oberen Enden der Feder- und/oder Dämpferelemente angeordnet ist.

9. Rahmentragstruktur (1) nach einem der vorhergehenden Ansprüche, **dadurch gekennzeichnet, dass** die dritte Tragkonstruktion (30) dazu dient, Kräfte aus den Lenkerelementen der Radaufhängungen (RA) aufzunehmen.

10. Nutzfahrzeug, insbesondere Lastkraftwagen, vorzugsweise Sattelzugmaschine, **gekennzeichnet durch** eine Rahmentragstruktur (1) nach einem der vorhergehenden Ansprüche.

## Claims

1. A frame supporting structure (1) for a commercial vehicle, preferably a lorry, in particular a semitrailer tractor, having:
- a first longitudinally extending supporting construction (10) and a second longitudinally extending supporting construction (20) which are spaced apart from one another in the transverse direction (QR) of the frame supporting structure (1), and
- two wheel suspensions (RA) for front wheels (Rv) of the commercial vehicle, in particular two wheel suspensions (RA) preferably having spring and/or damper elements,
wherein
- the frame supporting structure (1) comprises a damper support (DT) which interconnects the two wheel suspensions (RA) and/or serves to take up forces from the two wheel suspensions (RA),
**characterized in that**
- the frame supporting structure (1) comprises a third longitudinally extending supporting construction (30) which extends between the first supporting construction (10) and the second supporting construction (20); and/or
- the first supporting construction (10) and the second supporting construction (20) are routed laterally inwards in order to form a narrowed supporting structure (100), wherein the damper support (DT) extends over the narrowed supporting structure (100).

2. The frame supporting structure (1) according to Claim 1, **characterized in that** the damper support (DT) extends substantially in the transverse direction (QR) of the frame supporting structure (1) and is preferably connected to the first supporting construction (10) and the second supporting construction (20) in order to be carried by the first supporting construction (10) and the second supporting construction (20).

3. The frame supporting structure (1) according to Claim 1 or 2, **characterized in that** the damper support (DT) additionally serves as a bearing device, in particular a swing arm bearing, for a driver's cab of the commercial vehicle.

4. The frame supporting structure (1) according to one of the preceding claims, **characterized in that** the narrowed supporting structure (100) extends between the front wheels (Rv) for the commercial vehicle and preferably forms a front supporting structure.

5. The frame supporting structure (1) according to one of the preceding claims, **characterized in that** the narrowed supporting structure (100) creates space which serves to accommodate the wheel suspensions (RA), in particular the spring and/or damper elements thereof.

6. The frame supporting structure (1) according to one of the preceding claims, **characterized in that** the third longitudinally extending supporting construction (30) extends between the first supporting construction (10) and the second supporting construction (20), to be precise centrally at least in certain portions and/or below the level thereof.

7. The frame supporting structure (1) according to one of the preceding claims, **characterized in that** the third supporting construction (30) is connected to the damper support (DT) via a connecting device (VE) which additionally connects the first supporting construction (10) to the second supporting construction (20).

8. The frame supporting structure (1) according to one of the preceding claims, **characterized in that** the damper support (DT) serves to take up forces from the spring and/or damper elements of the wheel suspensions (RA) and is preferably arranged on top of upper ends of the spring and/or damper elements.

9. The frame supporting structure (1) according to one of the preceding claims, **characterized in that** the third supporting construction (30) serves to take up forces from the link elements of the wheel suspensions (RA).

10. A commercial vehicle, in particular a lorry, preferably a semitrailer tractor, **characterized by** a frame supporting structure (1) according to one of the preceding claims.

## Revendications

1. Structure de châssis (1) pour un véhicule utilitaire, de préférence un poids-lourd, en particulier un véhicule articulé, comprenant :
- une première construction porteuse s'étendant longitudinalement (10) et une deuxième construction porteuse s'étendant longitudinalement (20) qui sont espacées l'une de l'autre dans la direction transversale (QR) de la structure de châssis (1), et
- deux suspensions de roues (RA) pour des roues avant (Rv) du véhicule utilitaire, en particulier deux suspensions de roues (RA) présentant de préférence des éléments de ressort et/ou d'amortisseur,
- la structure de châssis (1) comprenant un support d'amortisseur (DT) qui relie l'une à l'autre les deux suspensions de roues (RA) et/ou qui sert à recevoir des forces provenant des deux suspensions de roue (RA),
**caractérisée en ce que**
- la structure de châssis (1) comprend une troisième construction porteuse s'étendant longitudinalement (30) qui s'étend entre la première construction porteuse (10) et la deuxième construction porteuse (20) ; et/ou
- la première construction porteuse (10) et la deuxième construction porteuse (20) sont guidées latéralement vers l'intérieur, afin de réaliser une structure porteuse réduite (100), le support d'amortisseur (DT) s'étendant au-delà de la structure porteuse réduite (100).

2. Structure de châssis (1) selon la revendication 1, **caractérisée en ce que** le support d'amortisseur (DT) s'étend essentiellement dans la direction transversale (QR) de la structure de châssis (1) et est de préférence connecté à la première construction porteuse (10) et à la deuxième construction porteuse (20) afin d'être porté par la première construction porteuse (10) et la deuxième construction porteuse (20).

3. Structure de châssis (1) selon la revendication 1 ou 2, **caractérisée en ce que** le support d'amortisseur (DT) sert en outre de dispositif de palier, en particulier de palier de bras oscillant, pour une cabine de conduite du véhicule utilitaire.

4. Structure de châssis (1) selon l'une quelconque des revendications précédentes, **caractérisée en ce que** la structure porteuse réduite (100) s'étend entre les roues avant (Rv) pour le véhicule utilitaire et forme de préférence une structure porteuse avant.

5. Structure de châssis (1) selon l'une quelconque des revendications précédentes, **caractérisée en ce que** la structure porteuse réduite (100) fournit un espace qui sert à recevoir les suspensions de roue (RA) en particulier leurs éléments de ressort et/ou d'amortisseur.

6. Structure de châssis (1) selon l'une quelconque des revendications précédentes, **caractérisée en ce que** la troisième construction porteuse s'étendant longitudinalement (30) s'étend entre la première construction porteuse (10) la deuxième construction porteuse (20) et ce au moins en partie centralement et/ou en dessous de leur niveau.

7. Structure de châssis (1) selon l'une quelconque des revendications précédentes, **caractérisée en ce que** la troisième construction porteuse (30) est connectée au support d'amortisseur (DT) par le biais d'un dispositif de liaison (VE) qui relie en outre la première construction porteuse (10) à la deuxième construction porteuse (20).

8. Structure de châssis (1) selon l'une quelconque des revendications précédentes, **caractérisée en ce que** le support d'amortisseur (DT) sert à recevoir des forces provenant des éléments de ressort et/ou d'amortisseur des suspensions de roues (RA) et est disposé de préférence en haut sur les extrémités supérieures des éléments de ressort et/ou d'amortisseur.

9. Structure de châssis (1) selon l'une quelconque des revendications précédentes, **caractérisée en ce que** la troisième construction porteuse (30) sert à recevoir des forces provenant des éléments de bras oscillant des suspensions de roues (RA).

10. Véhicule utilitaire, en particulier poids-lourd, de préférence véhicule articulé, **caractérisé par** une structure de châssis (1) selon l'une quelconque des revendications précédentes.
